# EUROPEAN PATENT APPLICATION

(11) **EP 4 625 515 A1**
(43) Date of publication of application: **01.10.2025**
(21) Application number: 24863817.3
(22) Date of filing: 05.09.2024
(51) Int. Cl.: H01M 4/13, H01M 4/36, H01M 10/0525

(54) **POSITIVE ELECTRODE SHEET, SECONDARY BATTERY AND ELECTRIC DEVICE**

(30) Priority: 07.02.2024 CN 202410175809
(71) Applicant: Contemporary Amperex Technology Co., Limited, Ningde, Fujian 352100 (CN)
(72) Inventor: HE, Siyuan, Ningde, Fujian 352100 (CN); BIE, Changfeng, Ningde, Fujian 352100 (CN); LIU, Hongyu, Ningde, Fujian 352100 (CN); LI, Xiaojing, Ningde, Fujian 352100 (CN); NI, Huan, Ningde, Fujian 352100 (CN)
(74) Representative: Laufhütte, Dieter
(86) International application number: PCT/CN2024/117026
(87) International publication number: WO 2025/167087

(57) **Abstract**

This application provides a positive electrode plate, a secondary battery (5), and an electrical device. Particularly, this application provides a positive electrode plate, including a positive current collector and a positive electrode film layer. The positive electrode film layer is disposed on at least one surface of the positive current collector. The positive electrode film layer includes a first positive electrode film layer and a second positive electrode film layer. The first positive electrode film layer is located between the positive current collector and the second positive electrode film layer. The first positive electrode film layer includes a first positive active material. A specific surface area of the first positive active material is 12 m²/g to 16 m²/g. Based on a total mass of the first positive active material, a carbon content of the first positive active material is 1.0 wt% to 1.5 wt%. The second positive electrode film layer includes a second positive active material. A specific surface area of the second positive active material is 6 m²/g to 19 m²/g. Based on a total mass of the second positive active material, a carbon content of the second positive active material is 1.1 wt% to 2.1 wt%.

## Description

### CROSS-REFERENCE TO RELATED APPLICATIONS

This application claims priority to Chinese Patent Application No. 202410175809.1, filed on February 7, 2024 and entitled "POSITIVE ELECTRODE PLATE, SECONDARY BATTERY, AND ELECTRICAL DEVICE", which is incorporated herein by reference in its entirety.

### TECHNICAL FIELD

This application relates to the technical field of secondary batteries, and in particular, to a positive electrode plate, a secondary battery, and an electrical device.

### BACKGROUND

By virtue of advantages such as a high energy density, a high operating voltage, a long cycle life, a light weight, and environmental friendliness, lithium-ion batteries have become an ideal, small-sized, and lightweight power supply of electronic devices such as cameras, mobile phones, laptop computers, and digital products, and are also a preferred power supply for a high-energy power battery in an electric vehicle in the future.

A lithium-ion battery mainly includes a positive electrode, a negative electrode, a separator, and an electrolyte solution. In a process of manufacturing a lithium-ion battery, a positive electrode slurry and a negative electrode slurry are applied onto corresponding current collectors respectively first, and then dried and cold-pressed before proceeding to subsequent processes. Due to characteristics of a positive active material (for example, a lithium iron phosphate salt, or a lithium manganese iron phosphate salt), a positive electrode plate is prone to become brittle after being cold-pressed. In subsequent slitting and cutting processes, the active material is prone to crack and fall off. The electrode plate is also prone to break off in a winding process, thereby seriously impairing the processing performance, electrochemical performance, and safety performance of the battery.

Therefore, it is necessary to provide a positive electrode plate of relatively high flexibility.

### SUMMARY

This application is developed in view of the above subject-matter. An objective of this application is to provide a positive electrode plate, a secondary battery, and an electrical device. The positive electrode plate is of relatively high flexibility.

The inventor hereof finds the technical solution of the present invention can achieve the above objective.

A first aspect of this application provides a positive electrode plate. The positive electrode plate includes a positive current collector and a positive electrode film layer. The positive electrode film layer is disposed on at least one surface of the positive current collector. The positive electrode film layer includes a first positive electrode film layer and a second positive electrode film layer. The first positive electrode film layer is located between the positive current collector and the second positive electrode film layer.

The first positive electrode film layer includes a first positive active material. A specific surface area of the first positive active material is 12 m²/g to 16 m²/g. Based on a total mass of the first positive active material, a carbon content of the first positive active material is 1.0 wt% to 1.5 wt%.

The second positive electrode film layer includes a second positive active material. A specific surface area of the second positive active material is 6 m²/g to 19 m²/g. Based on a total mass of the second positive active material, a carbon content of the second positive active material is 1.1 wt% to 2.1 wt%.

The positive electrode plate of this application is of relatively high flexibility.

In any embodiment, a compaction density of the first positive active material is 2.4 to 2.7 g/cm³ when measured under a pressure of 3 tons.

When the compaction density of the first positive active material is 2.4 to 2.7 g/cm³, a battery containing the positive electrode plate of this application achieves a relatively high energy density.

In any embodiment, the first positive active material includes first lithium iron phosphate salt particles and second lithium iron phosphate salt particles. An average primary particle diameter of the first lithium iron phosphate salt particles is 50 to 300 nm. An average primary particle diameter of the second lithium iron phosphate salt particles is 400 to 500 nm.

In any embodiment, based on a total number of the first lithium iron phosphate salt particles and the second lithium iron phosphate salt particles, a number percentage of the first lithium iron phosphate salt particles is 60% to 80%, and a number percentage of the second lithium iron phosphate salt particles is 20% to 40%.

In any embodiment, the second positive active material includes third lithium iron phosphate salt particles. A ratio of a coin cell capacity C₂ of the third lithium iron phosphate salt particles at 60 °C to a coin cell capacity C₁ of the third lithium iron phosphate salt particles at 25 °C is C₂/C₁ ≥ 1.02.

When C₂/C₁ ≥ 1.02, the positive electrode plate of this application achieves a relatively high compaction density, and a battery containing the positive electrode plate of this application exhibits a long cycle life, a low degree of capacity fading, and a high degree of cycle capacity ramp-up.

In any embodiment, based on the total mass of the second positive active material, the carbon content of the second positive active material is 1.2 wt% to 2 wt%.

When the carbon content of the second positive active material is 1.2 wt% to 2 wt%, the cycle life and gravimetric capacity of the battery containing the positive electrode plate of this application are well balanced.

In any embodiment, a ratio of a mass W₁ of the first positive active material to a mass W₂ of the second positive active material, denoted as W₁/W₂, is 1: 9 to 9: 1.

In any embodiment, a ratio of a mass W₁ of the first positive active material to a mass W₂ of the second positive active material, denoted as W₁/W₂, is 3: 7 to 7: 3.

When W₁/W₂ falls within the range of 3: 7 to 7: 3, the positive electrode plate of this application achieves a relatively high compaction density, and the battery containing the positive electrode plate of this application exhibits a relatively high degree of cycle capacity ramp-up.

In any embodiment, a thickness of the first positive electrode film layer and a thickness of the second positive electrode film layer each are independently 5 to 80 µm.

A second aspect of this application provides a secondary battery. The secondary battery includes the positive electrode plate according to the first aspect of this application.

A third aspect of this application provides an electrical device. The electrical device includes the secondary battery according to the second aspect of this application.

### BRIEF DESCRIPTION OF DRAWINGS

FIG. 1 is a scanning electron microscopy image of a first positive active material at a magnification of 10,000 according to Embodiment 1 of this application;
FIG. 2 is a scanning electron microscopy image of a second positive active material at a magnification of 10,000 according to Embodiment 1 of this application;
FIG. 3 is a schematic diagram of a secondary battery according to an embodiment of this application;
FIG. 4 is an exploded view of a secondary battery shown in FIG. 3 according to an embodiment of this application;
FIG. 5 is a schematic diagram of a battery module according to an embodiment of this application;
FIG. 6 is a schematic diagram of a battery pack according to an embodiment of this application;
FIG. 7 is an exploded view of a battery pack shown in FIG. 6 according to an embodiment of this application; and
FIG. 8 is a schematic diagram of an electrical device that uses a secondary battery as a power supply according to an embodiment of this application.

List of reference numerals:
1. battery pack; 2. upper box; 3. lower box; 4. battery module; 5. secondary battery; 51. housing; 52. electrode assembly; 53. top cap assembly.

### DETAILED DESCRIPTION OF EMBODIMENTS

The following discloses and describes in detail a positive electrode plate, a secondary battery, and an electrical device according to some embodiments of this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified, the term "or" used herein is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

A lithium-ion battery mainly includes a positive electrode, a negative electrode, a separator, and an electrolyte solution. In a process of manufacturing a lithium-ion battery, a positive electrode slurry and a negative electrode slurry are applied onto corresponding current collectors respectively first, and then dried and cold-pressed before proceeding to subsequent processes. Due to characteristics of a positive active material (for example, a lithium iron phosphate salt, or a lithium manganese iron phosphate salt), a positive electrode plate is prone to become brittle after being cold-pressed. In subsequent slitting and cutting processes, the active material is prone to crack and fall off. The electrode plate is also prone to break off in a winding process, thereby seriously impairing the processing performance, electrochemical performance, and safety performance of the battery. Therefore, it is necessary to provide a positive electrode plate of relatively high flexibility.

In view of this, this application puts forward a technical solution to the above technical problem.

A first aspect of this application provides a positive electrode plate. The positive electrode plate includes a positive current collector and a positive electrode film layer. The positive electrode film layer is disposed on at least one surface of the positive current collector. The positive electrode film layer includes a first positive electrode film layer and a second positive electrode film layer. The first positive electrode film layer is located between the positive current collector and the second positive electrode film layer.

The first positive electrode film layer includes a first positive active material. A specific surface area of the first positive active material is 12 m²/g to 16 m²/g. Based on a total mass of the first positive active material, a carbon content of the first positive active material is 1.0 wt% to 1.5 wt%.

The second positive electrode film layer includes a second positive active material. A specific surface area of the second positive active material is 6 m²/g to 19 m²/g. Based on a total mass of the second positive active material, a carbon content of the second positive active material is 1.1 wt% to 2.1 wt%.

When the above conditions are met, a surface of the second positive active material in the second positive electrode film layer is coated with a relatively large carbon coating amount, thereby effectively reducing a slip resistance between particles, and the particles slip more easily between the positive electrode materials. In this way, under the same electrode plate compaction conditions, slippage occurs more easily between the particles, the electrode plate is less prone to break off, and the flexibility of the electrode plate is improved, so that the positive electrode plate of this application is of relatively high flexibility.

In some embodiments, based on the total mass of the first positive active material, the carbon content of the first positive active material is Cₓ₁ wt%, and a ratio z₁ of a specific surface area of the first positive active material to Cₓ₁ satisfies: 10 ≤ z₁ ≤ 13.

In some embodiments, based on the total mass of the second positive active material, the carbon content of the second positive active material is Cₓ₂ wt%, and a ratio z₂ of a specific surface area of the second positive active material to Cₓ₂ satisfies: 6 ≤ z₂ ≤ 11.

When the above conditions are met, the graphitization degree of the carbon-coated surface is relatively high, and the slippage resistance is relatively small between layers. In this way, under the same electrode plate compaction conditions, slippage occurs more easily between the particles, and the electrode plate is less prone to break off, so that the positive electrode plate of this application is of relatively high flexibility.

In some embodiments, z₁ may be 10, 10.3, 11, 11.5, 12, 12.3, 12.5, 13, or a range formed by any two of the above z₁ values or a value within the range.

In some embodiments, z₂ may be 6, 6.5, 7, 7.5, 8, 8.5, 9, 9.5, 10, 10.5, 11, or a range formed by any two of the above z₂ values or a value within the range.

In this application, the term "specific surface area" or "BET" means a total external surface area per unit mass of the positive active material.

The BET specific surface area may be measured by a method and a device known in the art. For example, the specific surface area may be measured by using Tristar 3020 with reference to GB/T 19587-2004.

In some embodiments, the specific surface area of the first positive active material is 12.3 m²/g to 15.6 m²/g.

In some embodiments, the BET specific surface area of the first positive active material may be 12 m²/g, 12.3 m²/g, 13 m²/g, 13.2 m²/g, 13.5 m²/g, 14 m²/g, 14.4 m²/g, 14.5 m²/g, 15 m²/g, 15.5 m²/g, 15.6 m²/g, 16 m²/g, or a range formed by any two of the above BET specific surface area values of the first positive active material or a value within the range.

If the BET value of the first positive active material is excessively high, the water absorptivity of the material will increase, thereby impairing the processing performance of the slurry and increasing side reactions between the material and an electrolyte solution. However, if the BET value of the first positive active material is excessively low, the gravimetric capacity will decrease. Controlling the BET value of the first positive active material to fall within the range of 12 m²/g to 16 m²/g helps to achieve relative high processing performance of the slurry and a relatively high gravimetric capacity, thereby improving the processing performance of battery cells. In addition, this setting controls the side reactions between the material and the electrolyte solution to fall within an acceptable range, thereby improving a volumetric energy density of the battery and the lifespan of the battery cells.

In some embodiments, the specific surface area of the second positive active material is 6.6 m²/g to 19 m²/g.

In some embodiments, the BET specific surface area of the second positive active material may be 6 m²/g, 6.5 m²/g, 6.6 m²/g, 7 m²/g, 7.2 m²/g, 7.5 m²/g, 8 m²/g, 8.5 m²/g, 9 m²/g, 9.5 m²/g, 9.9 m²/g, 10 m²/g, 10.5 m²/g, 10.8 m²/g, 11 m²/g, 11.5 m²/g, 12 m²/g, 12.5 m²/g, 12.6 m²/g, 13 m²/g, 13.2 m²/g, 13.5 m²/g, 14 m²/g, 14.4 m²/g, 14.5 m²/g, 15 m²/g, 15.5 m²/g, 16 m²/g, 16.5 m²/g, 17 m²/g, 17.5 m²/g, 18 m²/g, 18.5 m²/g, 19 m²/g, or a range formed by any two of the above BET specific surface area values of the second positive active material or a value within this range.

If the BET value of the second positive active material is excessively high, the water absorptivity of the material will increase, thereby impairing the processing performance of the slurry and increasing side reactions between the material and the electrolyte solution. However, if the BET value of the second positive active material is excessively low, the gravimetric capacity will decrease. Controlling the BET value of the second positive active material to fall within the range of 6 m²/g to 19 m²/g helps to achieve relative high processing performance of the slurry and a relatively high gravimetric capacity, thereby improving the processing performance of the battery cells. In addition, this setting can regulate the degree of exerting the initial capacity of the second active material, and in turn, slow down the capacity fading.

The carbon content of the first positive active material/second positive active material may be measured by a method and a device known in the art. For example, the carbon content of the active material may be measured by an infrared absorption method with reference to the standard GB/T 20123-2006/ISO after the material is combusted in a high-frequency induction furnace.

In some embodiments, based on the total mass of the first positive active material, the carbon content of the first positive active material is Cₓ₁ wt%, satisfying: 1.0 ≤ Cₓ₁ ≤ 1.5.

If the carbon content of the first positive active material is excessively high, the intercalation and deintercalation of lithium ions will be impeded, and the gravimetric capacity of the battery will be impaired to some extent. However, if the carbon content of the first positive active material is excessively low, the electrical conductivity of the battery will be impaired, thereby being detrimental to the kinetic performance of the battery. Controlling the carbon content of the first positive active material to fall between 1.0 wt% and 1.5 wt% helps to achieve relatively high kinetic performance and a relatively high gravimetric capacity. The carbon content falling within the above weight percent range can maintain a good conductive network between the active material particles without affecting the exertion of the capacity, and can play a lubricating role between the particles, thereby achieving high kinetics and a high energy density.

In some embodiments, Cₓ₁ is 1.0, 1.1, 1.2, 1.3, 1.4, 1.5, or a range formed by any two of the above Cₓ₁ values of the first positive active material or a value within the range.

In some embodiments, the carbon contained in the first positive active material overlays a surface of particles of the first positive active material. In some embodiments, the carbon contained in the first positive active material is embedded in the particles of the first positive active material. In some embodiments, the carbon contained in the first positive active material partially overlays the surface of the particles and is partially embedded in the particles of the first positive active material.

In some embodiments, based on the total mass of the second positive active material, the carbon content of the second positive active material is 1.1 wt% to 2.1 wt%. In some embodiments, based on the total mass of the second positive active material, the carbon content of the second positive active material is 1.2 wt% to 2 wt%.

If the carbon content of the second positive active material is excessively high, the intercalation and deintercalation of lithium ions will be impeded, and the gravimetric capacity of the battery will be impaired to some extent. However, if the carbon content of the second positive active material is excessively low, the cycle life of the battery will be impaired. When the carbon content of the second positive active material is controlled to be 1.2 wt% to 2 wt%, the material is ensured to play a role in slowing down capacity fading, and at the same time, the decline in the exerted initial capacity can be compensated for by a complementary first active material, thereby slowing down capacity fading and maintaining a high energy density concurrently, and achieving a good balance between the cycle life and the gravimetric capacity of the battery containing the positive electrode plate of this application.

In some embodiments, Cₓ₂ is 1.2, 1.3, 1.4, 1.5, 1.6, 1.7, 1.8, 1.9, 2.0, 2.1, or a range formed by any two of the above Cₓ₂ values of the second positive active material or a value within the range.

In some embodiments, the carbon contained in the second positive active material overlays a surface of particles of the second positive active material. In some embodiments, the carbon contained in the second positive active material is embedded in the particles of the second positive active material. In some embodiments, the carbon contained in the second positive active material partially overlays the surface of the particles and is partially embedded in the particles of the second positive active material.

In some embodiments, a compaction density of the first positive active material is 2.4 to 2.7 g/cm³ when measured under a pressure of 3 tons. In some embodiments, the compaction density of the first positive active material is 2.43 to 2.63 g/cm³ when measured under a pressure of 3 tons (T).

When the compaction density of the first positive active material is 2.4 to 2.7 g/cm³, with the volume being constant, a larger amount of active material can be accommodated per unit volume when the compaction density is higher, thereby increasing the energy density, and imparting a relatively high energy density to the battery containing the positive electrode plate of this application.

In some embodiments, the first positive active material includes first lithium iron phosphate salt particles and second lithium iron phosphate salt particles. An average primary particle diameter of the first lithium iron phosphate salt particles is 50 to 300 nm. An average primary particle diameter of the second lithium iron phosphate salt particles is 400 to 500 nm.

With the above setting of the particle diameter, under the same pressure conditions, the electrode plate is less porous, thereby achieving a high compaction density and increasing the energy density.

In some embodiments, based on a total number of the first lithium iron phosphate salt particles and the second lithium iron phosphate salt particles, a number percentage of the first lithium iron phosphate salt particles is 60% to 80%, and a number percentage of the second lithium iron phosphate salt particles is 20% to 40%.

With the above number distribution of the particles of the above diameter, under the same pressure conditions, the electrode plate is also less porous, thereby increasing the compaction density and the energy density.

As used herein, the term "average primary particle diameter" means an average value of primary particle diameters of all particles, where the primary particle diameter of a particle means the longest length of a line that connects any two points on the edge of a cross-sectional view of the particle.

The average primary particle diameter of the first lithium iron phosphate salt particle/second lithium iron phosphate salt particle may be measured by a method and a device known in the art. For example, the average primary particle diameter may be measured by a Feret diameter statistical method by using a scanning electron microscope. An exemplary measurement process is: taking specimens of the particles, measuring the average primary particle diameter of the specimens with a ZEISS sigma 300 scanning electron microscope with reference to the standard JY/T010-1996, and observing the morphology of the specimen. Observing the morphology of the primary particles, and observing the particles in any 10 regions of the same size and the same shape in the same scanning electron microscope (SEM) image at a magnification of 10,000. Subsequently, identifying 5 positions that include four corners and a center in each of the 10 regions, selecting a Feret particle diameter of any one primary particle at each of the positions observed at this magnification in this region, and averaging out the Feret particle diameters at the 5 positions that include the four corners and the center, so as to obtain the particle diameter of the primary particles in this region. Subsequently, comparing and counting the particle diameters of the primary particles obtained in the 10 regions, so as to obtain the distribution percentage (number percentage) of the particle diameters of the primary particles. Averaging out the particle diameters of the primary particles obtained in the 10 regions, so as to obtain an average particle diameter of the primary particles (that is, average primary particle diameter). Specifically, determining that the average value of 4 dimensions (that is, dimensions of 2 adjacent sides of a circumscribing rectangle around the SEM image of the particle, and dimensions of two diagonal lines tilted respectively at 45 degrees with respect to the 2 adjacent sides of the circumscribing rectangle around the image) is the Feret particle diameter of the particle.

In some embodiments, the average primary particle diameter of the first lithium iron phosphate salt particles may be 50 nm, 100 nm, 150 nm, 200 nm, 250 nm, 300 nm, or a range formed by any two of the above average primary particle diameter values or a value within the range.

In some embodiments, the average primary particle diameter of the second lithium iron phosphate salt particles may be 400 nm, 410 nm, 420 nm, 430 nm, 440 nm, 450 nm, 460 nm, 470 nm, 480 nm, 490 nm, 500 nm, or a range formed by any two of the above average primary particle diameter values or a value within the range.

In some embodiments, the second positive active material includes third lithium iron phosphate salt particles. A ratio of a coin cell capacity C₂ of the third lithium iron phosphate salt particles at 60 °C to a coin cell capacity C₁ of the third lithium iron phosphate salt particles at 25 °C is C₂/C₁ ≥ 1.02.

When C₂/C₁ ≥ 1.02, the capacity of the active material is unable to be fully exerted in initial cycles of the battery. During repeated cycles of the battery, along with the activation of the active material, the capacity is gradually exerted, so that the capacity retention rate in the initial cycles of the battery is increased. Therefore, when C₂/C₁ ≥ 1.02, the positive electrode plate of this application achieves a relatively high compaction density, and a battery containing the positive electrode plate of this application exhibits a long cycle life, a low degree of capacity fading, and a high degree of cycle capacity ramp-up.

A method for measuring a coin cell capacity of the third lithium iron phosphate salt particles is as follows:

Preparing a coin cell by the following method before measuring the coin cell capacity of the third lithium iron phosphate salt particles: mixing the third lithium iron phosphate salt particles, polyvinylidene difluoride (PVDF) as a binder, and acetylene black as a conductive agent at a mass ratio of 95: 5: 5, adding an appropriate amount of N-methyl-pyrrolidone (NMP) solvent, and stirring well to form a homogeneous positive electrode slurry; and applying the slurry onto a 1 µm-thick aluminum foil used as a positive current collector, and then performing oven-drying, cold-pressing, and die-cutting to form a 14 mm-diameter disc that serves as a positive electrode. Assembling a coin half-cell by using a lithium sheet as a negative electrode, and a 12 µm-thick polypropylene film as a separator, and by using a typical lithium iron phosphate electrolyte solution.

Subsequently, for the coin cell capacity C₂ of the third lithium iron phosphate salt particles at 60 °C: charging and discharging the coin cell at a 0.1 C rate at 60 °C, and recording a corresponding gravimetric capacity. The test conditions are as follows: leaving the coin cell to stand for 3 hours at 60 °C, and then charging the coin cell at a constant current of 0.1C until an upper-limit cut-off voltage (3.75 V), and then charging the coin cell at a constant voltage until the current reaches 50 µA; leaving the coin cell to stand for 5 minutes, and recording a charge capacity of the coin cell. Gravimetric charge capacity C₂ of the third lithium iron phosphate salt particles at 60 °C = charge capacity of the coin cell at 60 °C/mass of the third lithium iron phosphate salt particles in the coin cell.

For the coin cell capacity C₂ (that is, gravimetric capacity) of the third lithium iron phosphate salt particles at 25 °C: charging and discharging the coin cell at a 0.1C rate at 25 °C, and recording a corresponding gravimetric capacity. The test conditions are as follows: leaving the coin cell to stand for 3 hours at 25 °C, and then charging the coin cell at a constant current of 0.1C until an upper-limit cut-off voltage (3.75 V), and then charging the coin cell at a constant voltage until the current reaches 50 µA; leaving the coin cell to stand for 5 minutes, and recording a charge capacity of the coin cell. Gravimetric charge capacity C₁ of the third lithium iron phosphate salt particles at 25 °C = charge capacity of the coin cell at 25 °C/mass of the third lithium iron phosphate salt particles in the coin cell.

In some embodiments, C₂/C₁ may be 1, 1.01, 1.02, 1.03, 1.04, 1.05, 1.06, 1.07, 1.08, 1.09, 1.1, or a range formed by any two of the above C₂/C₁ values or a value within the range.

In some embodiments, the average primary particle diameter of the third lithium iron phosphate salt particles may be 200 nm, 250 nm, 300 nm, 350 nm, 400 nm, 450 nm, 500 nm, 550 nm, 600 nm, or a range formed by any two of the above average primary particle diameter values or a value within the range.

The average primary particle diameter of the third lithium iron phosphate salt particles may be measured in the same way as the average primary particle diameter of the first lithium iron phosphate salt particles.

In some embodiments, the Dᵥ₅₀ of the third lithium iron phosphate salt particles may be 0.1 µm, 0.2 µm, 0.3 µm, 0.4 µm, 0.5 µm, 0.6 µm, 0.7 µm, 0.8 µm, 0.9 µm, 1 µm, 1.1 µm, 1.2 µm, 1.3 µm, 1.4 µm, 1.5 µm, or a range formed by any two of the above Dᵥ₅₀ values or a value within the range.

The Dᵥ₅₀ may be measured by a method and device known in the art. For example, the measurement may be performed by using a laser particle size analyzer (Malvern Mastersizer 3000) with reference to the standard GB/T19077-2016/ISO13320: 2009. A specific test process is: Taking an appropriate amount of particle specimen, where the concentration of the specimen needs to ensure a shading degree of 8% to 12%; adding 20 mL of deionized water, sonicating the solution externally for 5 minutes at a sonication frequency of 53 KHz and a sonication power of 120 W to ensure thorough dispersion of the specimen, and then measuring the specimen with reference to the standard GB/T19077-2016/ISO13320: 2009.

In some embodiments, a ratio of a mass W₁ of the first positive active material to a mass W₂ of the second positive active material, denoted as W₁/W₂, is 1: 9 to 9: 1.

In some embodiments, a ratio of a mass W₁ of the first positive active material to a mass W₂ of the second positive active material, denoted as W₁/W₂, is 3: 7 to 7: 3.

When W₁/W₂ is 3: 7 to 7: 3, the first active material layer ensures a high energy density of the battery, and the second active material layer optimizes the flexibility of the electrode plate of the battery while slowing down capacity fading. Therefore, when W₁/W₂ falls within the range of 3: 7 to 7: 3, the positive electrode plate of this application achieves a relatively high compaction density, and the battery containing the positive electrode plate of this application exhibits a high degree of cycle capacity ramp-up.

In some embodiments, the thickness of the first positive electrode film layer and the thickness of the second positive electrode film layer each are independently 5 to 80 µm. In some embodiments, the thickness of the first positive electrode film layer and the thickness of the second positive electrode film layer each are independently 8 to 72 µm. In some embodiments, the thickness of the first positive electrode film layer and the thickness of the second positive electrode film layer each are independently 24 to 56 µm. In some embodiments, the thickness of the first positive electrode film layer and the thickness of the second positive electrode film layer each are independently 30 to 50 µm. In some embodiments, the thickness of the first positive electrode film layer and the thickness of the second positive electrode film layer each are independently 5 µm, 8 µm, 10 µm, 15 µm, 16 µm, 20 µm, 24 µm, 25 µm, 30 µm, 32 µm, 35 µm, 40 µm, 45 µm, 48 µm, 50 µm, 55 µm, 56 µm, 60 µm, 64 µm, 65 µm, 70 µm, 72 µm, 75 µm, 80 µm, or a range formed by any two of the above thickness values or a value within the range.

A second aspect of this application provides a secondary battery. The secondary battery includes the positive electrode plate according to the first aspect of this application.

A third aspect of this application provides an electrical device. The electrical device includes the secondary battery according to the second aspect of this application.

Next, a secondary battery and an electrical device according to this application are described below with due reference to drawings.

In an embodiment of this application, a secondary battery is provided.

Generally, the secondary battery includes a positive electrode plate, a negative electrode plate, an electrolyte, and a separator. In a charge-and-discharge cycle of the battery, active ions are shuttled between the positive electrode plate and the negative electrode plate by intercalation and deintercalation. The electrolyte serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of ions.

### [Positive electrode plate]

The positive electrode plate includes a positive current collector and a positive electrode film layer that overlays at least one surface of the positive current collector. The positive electrode film layer includes a positive active material.

As an example, the positive current collector includes two surfaces opposite to each other in a thickness direction of the positive current collector. The positive electrode film layer is disposed on either or both of the two opposite surfaces of the positive current collector.

In some embodiments, the positive current collector may be metal foil or a composite current collector. For example, the metal foil may be aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the positive electrode film layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the positive electrode film layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive electrode slurry, coating a positive current collector with the positive electrode slurry, and performing steps such as drying and cold pressing to obtain the positive electrode plate.

### [Negative electrode plate]

A negative electrode plate includes a negative current collector and a negative electrode film layer disposed on at least one surface of the negative current collector. The negative electrode film layer includes a negative active material.

As an example, the negative current collector includes two surfaces opposite to each other in a thickness direction of the negative current collector. The negative electrode film layer is disposed on either or both of the two opposite surfaces of the negative current collector.

In some embodiments, the negative current collector may be metal foil or a composite current collector. For example, the metal foil may be copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the negative active material may be a negative active material well-known in the art for use in a battery. As an example, the negative active material may include at least one of the following materials: artificial graphite, natural graphite, soft carbon, hard carbon, silicon-based material, tin-based material, lithium titanium oxide, and the like. The silicon-based material may be at least one selected from elemental silicon, a silicon-oxygen compound, a silicon-carbon composite, a silicon-nitrogen composite, and a silicon alloy. The tin-based material may be at least one selected from elemental tin, a tin-oxygen compound, or a tin alloy. However, this application is not limited to such materials, and other conventional materials usable as a negative active material of a battery may be used instead. One of the negative active materials may be used alone, or at least two thereof may be used in combination.

In some embodiments, the negative electrode film layer may further include a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

In some embodiments, the negative electrode film layer may further include a conductive agent. The conductive agent may be at least one selected from superconductive carbon, acetylene black, carbon black, Ketjen black, carbon dots, carbon nanotubes, graphene, or carbon nanofibers.

In some embodiments, the negative electrode film layer may further include other agents, such as a thickener (for example, sodium carboxymethyl cellulose (CMC-Na)).

In some embodiments, the negative electrode plate may be prepared according to the following method: dispersing the ingredients of the negative electrode plate such as the negative active material, the conductive agent, and the binder and any other ingredients in a solvent (such as deionized water) to form a negative electrode slurry, coating a negative current collector with the negative electrode slurry, and performing steps such as drying and cold calendering to obtain the negative electrode plate.

### [Electrolyte]

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some embodiments, the electrolyte is an electrolyte solution. The electrolyte solution includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane.

In some embodiments, the electrolyte solution further optionally includes an additive. For example, the additive may include a negative electrode film-forming additive or a positive electrode film-forming additive. The additive may further include an additive capable of improving specified performance of the battery, for example, an additive for improving overcharge performance of the battery, or an additive for improving high- or low-temperature performance of the battery.

### [Separator]

In some embodiments, the secondary battery further includes a separator. The type of the separator is not particularly limited in this application, and may be any well-known porous separator that is highly stable both chemically and mechanically.

In some embodiments, the separator may be made of a material that is at least one selected from glass fiber, non-woven fabric, polyethylene, polypropylene, and polyvinylidene difluoride. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

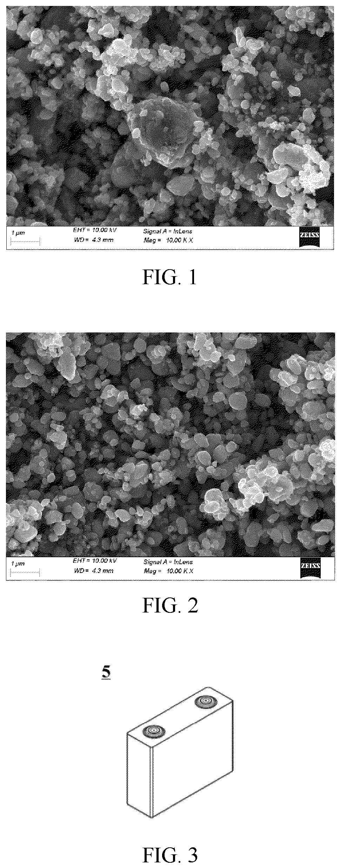

The shape of the secondary battery is not particularly limited in this application, and may be cylindrical, prismatic or any other shape. FIG. 3 shows a prismatic secondary battery 5 as an example.

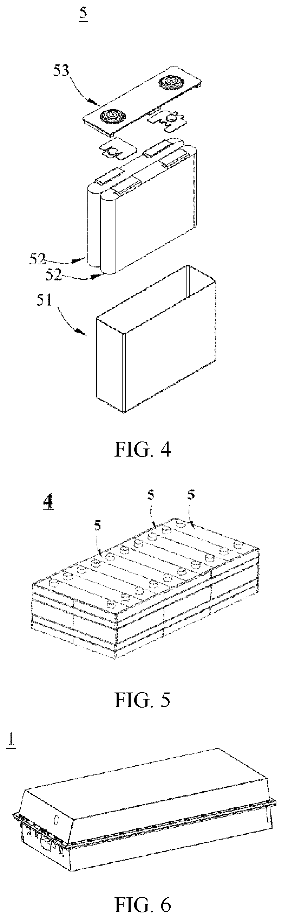

In some embodiments, referring to FIG. 4, the outer package may include a housing 51 and a cover plate 53. The housing 51 may include a bottom plate and a side plate connected to the bottom plate. The bottom plate and the side plate close in to form an accommodation cavity. An opening that communicates with the accommodation cavity is created on the housing 51. The cover plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 in a secondary battery 5 may be one or more, and may be selected by a person skilled in the art as actually required.

In some embodiments, the secondary battery may be assembled into a battery module. The battery module may include one or more secondary batteries, and the specific number of secondary batteries in a battery module may be selected by a person skilled in the art depending on practical applications and capacity of the battery module.

FIG. 5 shows a battery module 4 as an example. Referring to FIG. 5, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

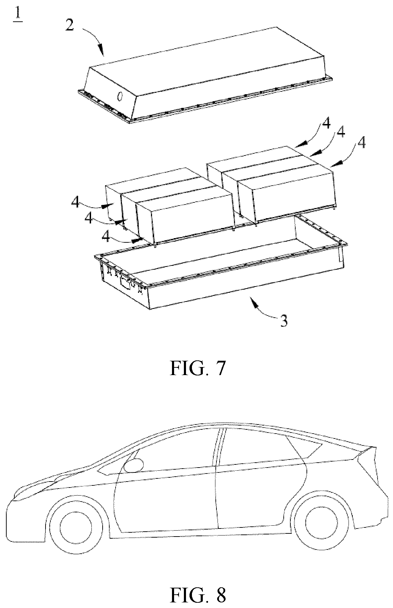

FIG. 6 and FIG. 7 show a battery pack 1 as an example. Referring to FIG. 6 and FIG. 7, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

Further, this application provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

FIG. 8 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

### Embodiments

The following describes some embodiments of this application. The embodiments described below are illustrative, and are merely intended to construe this application but not to limit this application. Unless techniques or conditions are otherwise expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

### I. Preparation methods

### Embodiment 1

### 1) Preparing a positive active material and a positive electrode slurry

A method for preparing the first positive active material is as follows: Using ferrous oxalate and lithium dihydrogen phosphate (mixed at a mass ratio of 1: 2) as raw materials, using polyethylene glycol as a carbon source, with the mass of the carbon source accounting for 17% of the total mass of the raw materials (ferrous oxalate + lithium dihydrogen phosphate + polyethylene glycol), and adding 2000 ppm TiO₂ (based on the total mass of the raw materials) as an additive; grinding the mixture with a sand mill until the particle diameter Dᵥ₅₀ reaches 0.4 µm, and then spray-drying the mixture while controlling the outlet temperature to be 150 °C, so as to obtain a spherical dried material. Sintering the spherical dried material in a nitrogen atmosphere while setting the loading amount to 5 kg, the nitrogen flow rate to 300 L/min, the heating rate to 3 °C/min, and the sintering temperature to 780 °C; and keeping the temperature constant for a period of 12 h to obtain a sintered material. Using a jet mill to pulverize the sintered material with an airflow when the jet mill runs at a frequency of 50 Hz, so as to obtain a first positive active material. Measuring the primary particle diameter of each particle in the material. Counting the particles with a primary particle diameter less than or equal to 350 nm, and averaging out the particle diameter of such particles, so as to obtain a number and an average particle diameter of the first lithium iron phosphate salt particles. Counting the particles with a primary particle diameter greater than 350 nm, and averaging out the particle diameter of such particles, so as to obtain a number and an average particle diameter of the second lithium iron phosphate salt particles. Based on the total number of the first lithium iron phosphate salt particles and the second lithium iron phosphate salt particles, the average primary particle diameter of the first lithium iron phosphate salt particles is 150 nm, the number percentage of the first lithium iron phosphate salt particles is 70%, the average primary particle diameter of the second lithium iron phosphate salt particles is 450 nm, and the number percentage of the second lithium iron phosphate salt particles is 30%.

Mixing the first positive active material, polyvinylidene difluoride (PVDF) as a binder, and acetylene black as a conductive agent at a mass ratio of 97.3: 2: 0.7, adding an appropriate amount of N-methyl-pyrrolidone (NMP) as a solvent, and stirring well to form a homogeneous first positive electrode slurry with a viscosity of 6000 mPa·s.

A method for preparing the second positive active material is as follows: Using iron phosphate and lithium carbonate as raw materials, and adding glucose and polyethylene glycol at a mass ratio of 7: 3 to serve as a carbon source, with the mass of the carbon source accounting for 17% of the total mass of the raw materials. Mixing the above iron phosphate, lithium carbonate, and carbon source at a mass ratio of 3.85: 1: 1, and wet-grinding the mixture by using water as a solvent until the Dᵥ₅₀ of the resultant slurry is 300 nm. Spray-drying the resultant slurry, and then sintering the slurry in a roller furnace at 760 °C for 24 h while passing nitrogen into the furnace, during which the heating rate is 3 °C/min. Subsequently, naturally cooling the sintered product to a temperature below 80 °C, and then discharging the sintered product as a calcined material. Jet milling, sieving, and demagnetizing the calcined material, and then vacuum-packaging the material. Setting the frequency of a grading machine to 80 Hz and setting the frequency of an induced draft fan to 40 Hz during jet milling to obtain a second positive active material, where the average primary particle diameter of the third lithium iron phosphate salt particles is 400 nm and the Dᵥ₅₀ of the particles is 0.7 µm.

Mixing the second positive active material, polyvinylidene difluoride (PVDF) as a binder, and acetylene black as a conductive agent at a mass ratio of 97.3: 2: 0.7, adding an appropriate amount of N-methyl-pyrrolidone (NMP) as a solvent, and stirring well to form a homogeneous second positive electrode slurry with a viscosity of 6000 mPa·s.

### 2) Preparing a positive electrode plate

Applying the first positive electrode slurry onto a 15 µm-thick aluminum foil, where the coating weight is 160 mg/1540.25 cm²; and then oven-drying the slurry to form a first positive electrode film layer. The specific surface area of the first positive active material is 13.2 m²/g, the carbon content of the first positive active material is Cₓ₁ wt%, where Cₓ₁ is 1.2, and a ratio of the specific surface area of the first positive active material to Cₓ₁ is z₁ = 12.

Applying the second positive electrode slurry onto the first positive electrode film layer, where the coating weight is 160 mg/1540.25 cm²; and then oven-drying the slurry to form a second positive electrode film layer. The specific surface area of the second positive active material is 10.8 m²/g, the carbon content of the second positive active material is Cₓ₂ wt%, where Cₓ₂ is 1.8, and a ratio of the specific surface area of the second positive active material to Cₓ₂ is z₂ = 6.

Combining the aluminum foil, the first positive electrode film layer, and the second positive electrode film layer to form a positive electrode plate.

### 3) Preparing a negative electrode plate

Mixing graphite as a negative active material, sodium carboxymethyl cellulose as a thickener, styrene-butadiene rubber as a binder, and acetylene black as a conductive agent at a mass ratio of 97: 1: 1: 1. Adding deionized water, and mixing well with a vacuum mixer to obtain a negative electrode slurry. Applying the negative electrode slurry evenly onto an 8 µm-thick copper foil. Subsequently, performing oven-drying, cold-pressing, and slitting to obtain a negative electrode plate.

### 4) Preparing an electrolyte solution

Mixing ethylene carbonate, ethyl methyl carbonate, and diethyl carbonate at a volume ratio of 20: 20: 60 to form a mixed solution, and then dissolving a well-dried lithium salt in the mixed solution, and then adding 10 wt% fluoroethylene carbonate as an additive, and stirring well to obtain an electrolyte solution. The concentration of the lithium salt is 1 mol/L. The entire preparation process is performed in an argon atmosphere glovebox in which the water content is less than 10 ppm.

### 5) Separator

Using a 12 µm-thick polyethylene film as a separator.

### 6) Preparing a battery

Stacking the positive electrode plate, the separator, and the negative electrode plate sequentially, placing the separator between the positive electrode and the negative electrode to serve a function of separation, and winding the stacked structure to obtain a bare cell. Putting the bare cell into an outer package, injecting the prepared electrolyte solution, and performing packaging, injection, chemical formation, degassing, and other steps to obtain a lithium-ion battery.

### Embodiment 2

Embodiment 2 differs from Embodiment 1 in that the specific surface area of the first positive active material is 14.4, so that the ratio of the specific surface area of the first positive active material to Cₓ₁ is z₁ = 12.

### Embodiment 3

Embodiment 3 differs from Embodiment 1 in that the specific surface area of the first positive active material is 15.6, so that the ratio of the specific surface area of the first positive active material to Cₓ₁ is z₁ = 13.

### Embodiment 4

Embodiment 4 differs from Embodiment 1 in that the ratio of the coin cell capacity C₂ of the third lithium iron phosphate salt particles at 60 °C to the coin cell capacity C₁ of the third lithium iron phosphate salt particles at 25 °C is C₂/C₁ = 1.04, and the specific surface area of the second positive active material is 14.4, so that the ratio of the specific surface area of the second positive active material to Cₓ₂ is z₂ = 8.

### Embodiment 5

Embodiment 5 differs from Embodiment 1 in that C₂/C₁ = 1.025, and the specific surface area of the second positive active material is 18 m²/g, and the specific surface area of the second positive active material is 18, so that the ratio of the specific surface area of the second positive active material to Cₓ₂ is z₂ = 10.

### Embodiment 6

Embodiment 6 differs from Embodiment 1 in that C₂/C₁ = 1.02.

### Embodiment 7

Embodiment 7 differs from Embodiment 1 in that the specific surface area of the second positive active material is 7.2 m²/g, and the carbon content is Cₓ₂ wt%, where Cₓ₂ is 1.2.

### Embodiment 8

Embodiment 8 differs from Embodiment 1 in that the specific surface area of the second positive active material is 12 m²/g, and the carbon content is Cₓ₂ wt%, where Cₓ₂ is 2.

### Embodiment 9

Embodiment 9 differs from Embodiment 1 in that the specific surface area of the second positive active material is 6.6 m²/g, and the carbon content is Cₓ₂ wt%, where Cₓ₂ is 1.1.

### Embodiment 10

Embodiment 10 differs from Embodiment 1 in that the specific surface area of the second positive active material is 12.6 m²/g, and the carbon content is Cₓ₂ wt%, where Cₓ₂ is 2.1.

### Embodiment 11

Embodiment 11 differs from Embodiment 1 in that the average primary particle diameter of the first lithium iron phosphate salt particles is 300 nm, the number percentage of the first lithium iron phosphate salt particles is 60% (based on the total number of the first lithium iron phosphate salt particles and the second lithium iron phosphate salt particles), the average primary particle diameter of the second lithium iron phosphate salt particles is 400 nm, and the number percentage of the second lithium iron phosphate salt particles is 40% (based on the total number of the first lithium iron phosphate salt particles and the second lithium iron phosphate salt particles); and the ratio of the mass W₁ of the first positive active material to the mass W₂ of the second positive active material, denoted as W₁/W₂, is 1: 9 (the total mass of the first positive active material and the second positive active material is the same as that in Embodiment 1).

### Embodiment 12

Embodiment 12 differs from Embodiment 1 in that the average primary particle diameter of the first lithium iron phosphate salt particles is 50 nm, the number percentage of the first lithium iron phosphate salt particles is 80% (based on the total number of the first lithium iron phosphate salt particles and the second lithium iron phosphate salt particles), the average primary particle diameter of the second lithium iron phosphate salt particles is 500 nm, and the number percentage of the second lithium iron phosphate salt particles is 20% (based on the total number of the first lithium iron phosphate salt particles and the second lithium iron phosphate salt particles), and the W₁/W₂ ratio is 9: 1 (the total mass of the first positive active material and the second positive active material is the same as that in Embodiment 1).

### Embodiment 13

Embodiment 13 differs from Embodiment 1 in that the W₁/W₂ ratio is 3: 7 (the total mass of the first positive active material and the second positive active material is the same as that in Embodiment 1).

### Embodiment 14

Embodiment 14 differs from Embodiment 1 in that the W₁/W₂ ratio is 7: 3 (the total mass of the first positive active material and the second positive active material is the same as that in Embodiment 1).

### Embodiment 15

Embodiment 15 differs from Embodiment 1 in that the W₁/W₂ ratio is 1: 9 (the total mass of the first positive active material and the second positive active material is the same as that in Embodiment 1).

### Embodiment 16

Embodiment 16 differs from Embodiment 1 in that the W₁/W₂ ratio is 9: 1 (the total mass of the first positive active material and the second positive active material is the same as that in Embodiment 1).

### Embodiment 17

Embodiment 17 differs from Embodiment 1 in that C₂/C₁ = 1.01, and the specific surface area of the second positive active material is 19 m²/g, so that z₂ is 10.5.

### Embodiment 18

Embodiment 18 differs from Embodiment 1 in that the specific surface area of the first positive active material is 12.3 m²/g, and the carbon content is Cₓ₁ wt%, where Cₓ₁ is 1, so that z₁ is 12.3.

### Embodiment 19

Embodiment 19 differs from Embodiment 1 in that the specific surface area of the first positive active material is 15.5 m²/g, and the carbon content is Cₓ₁ wt%, where Cₓ₁ is 1.5, so that z₁ is 10.3.

### Comparative Embodiment 1

Comparative Embodiment 1 differs from Embodiment 1 in that the second positive electrode film layer is not included, and the aluminum foil is combined with the first positive electrode film layer to form a positive electrode plate.

### Comparative Embodiment 2

Comparative Embodiment 2 differs from Embodiment 2 in that the second positive electrode film layer is not included, and the aluminum foil is combined with the first positive electrode film layer to form a positive electrode plate.

### Comparative Embodiment 3

Comparative Embodiment 3 differs from Embodiment 3 in that the second positive electrode film layer is not included, and the aluminum foil is combined with the first positive electrode film layer to form a positive electrode plate.

### II. Testing the battery performance

### 1) Average primary particle diameter

Taking specimens of the particles, measuring the average primary particle diameter of the specimens with a ZEISS sigma 300 scanning electron microscope with reference to the standard JY/T010-1996, and observing the morphology of the specimen.

Observing the morphology of the primary particles, and observing the particles in any 10 regions of the same size and the same shape in the same scanning electron microscope (SEM) image at a magnification of 10,000. Subsequently, identifying 5 positions that include four corners and a center in each of the 10 regions, selecting a Feret particle diameter of any one primary particle at each of the positions observed at this magnification in this region, and averaging out the Feret particle diameters at the 5 positions that include the four corners and the center, so as to obtain the particle diameter of the primary particles in this region. Subsequently, comparing and counting the particle diameters of the primary particles obtained in the 10 regions, so as to obtain the distribution percentage (number percentage) of the particle diameters of the primary particles. Averaging out the particle diameters of the primary particles obtained in the 10 regions, so as to obtain an average particle diameter of the primary particles (that is, average primary particle diameter). Specifically, determining that the average value of 4 dimensions (that is, dimensions of 2 adjacent sides of a circumscribing rectangle around the SEM image of the particle, and dimensions of two diagonal lines tilted respectively at 45 degrees with respect to the 2 adjacent sides of the circumscribing rectangle around the image) is the Feret particle diameter of the particle.

### 2) Dᵥ₅₀

The volume median diameter is measured with a Malvern 3000 (MasterSizer 3000) laser particle size analyzer with reference to the standard: GB/T19077-2016/ISO13320: 2009.

A specific test process is: Taking an appropriate amount of particle specimen, where the concentration of the specimen needs to ensure a shading degree of 8% to 12%; adding 20 mL of deionized water, sonicating the solution externally for 5 minutes at a sonication frequency of 53 KHz and a sonication power of 120 W to ensure thorough dispersion of the specimen, and then measuring the specimen with reference to the standard GB/T19077-2016/ISO13320: 2009.

### 3) Specific surface area

The specific surface area is measured with a Tristar3020 instrument with reference to the standard GB/T 19587-2004.

### 4) Carbon content

The carbon content is measured by an infrared absorption method with reference to the standard GB/T 20123-2006/ISO after the material is combusted in a high-frequency induction furnace.

### 5) Compaction density

### i) Powder compaction density

Putting a specified amount of powder between an upper metal sheet and a lower metal sheet of a specialpurpose compaction mold of a known diameter. Applying a pressure of 3 tons and measuring the corresponding powder thickness at the same time to obtain the corresponding powder volume at this time. Calculating the compaction density ρ by use of the formula ρ = m/v. The specific operation may be performed with reference to the standard GB/T24533-2009.

### ii) Compaction density of the electrode plate

Cutting out a film of 1000 mm in length from the electrode plate. Rolling the positive electrode plate with a specified pressure so that the length of the film elongates to 1006 mm by virtue of ductility of the aluminum foil. Die-cutting the film to obtain a disc of 1540.25 mm² in area, measuring the mass and thickness of the disc, and calculating the compaction density.

### 6) Coin cell capacity at 60 °C/25 °C

Mixing the third lithium iron phosphate salt particles, polyvinylidene difluoride (PVDF) as a binder, and acetylene black as a conductive agent at a mass ratio of 95: 5: 5, adding an appropriate amount of N-methyl-pyrrolidone (NMP) solvent, and stirring well to form a homogeneous positive electrode slurry; and applying the slurry onto a 1 µm-thick aluminum foil used as a positive current collector, and then performing oven-drying, cold-pressing, and die-cutting to form a 14 mm-diameter disc that serves as a positive electrode. Assembling a coin half-cell by using a lithium sheet as a negative electrode, and a 12 µm-thick polypropylene film as a separator, and by using a typical lithium iron phosphate electrolyte solution. Charging and discharging the coin cell at a 0.1C rate at 60 °C/25 °C, and recording a corresponding gravimetric capacity.

The test conditions are as follows: leaving the coin cell to stand for 3 hours at 25 °C, and then charging the coin cell at a constant current of 0.1C until an upper-limit cut-off voltage (3.75 V), and then charging the coin cell at a constant voltage until the current reaches 50 µA; leaving the coin cell to stand for 5 minutes, and recording a charge capacity of the coin cell. Gravimetric charge capacity C₁ of the third lithium iron phosphate salt particles at 25 °C = charge capacity of the coin cell at 25 °C/mass of the third lithium iron phosphate salt particles in the coin cell. Leaving the coin cell to stand for 3 hours at 60 °C, and then charging the coin cell at a constant current of 0.1C until an upper-limit cut-off voltage (3.75 V), and then charging the coin cell at a constant voltage until the current reaches 50 µA; leaving the coin cell to stand for 5 minutes, and recording a charge capacity of the coin cell. Gravimetric charge capacity C₂ of the third lithium iron phosphate salt particles at 60 °C = charge capacity of the coin cell at 60 °C/mass of the third lithium iron phosphate salt particles in the coin cell.

### 7) Cycle life test

1. Leaving the battery cell to stand at 20 °C for 120 min.
2. Discharging the battery cell at a current of 1C until the voltage drops to 2.5 V.
3. Leaving the battery cell to stand at 25 °C for 30 min.
4. Charging the battery cell at a constant current of 1C until the voltage reaches 3.65 V, and then charging the battery cell at a constant voltage until the current drops to 0.05C.
5. Leaving the battery cell to stand at 25 °C for 5 min.
6. Discharging the battery cell at a current of 1C until the voltage drops to 2.5 V.
7. Leaving the battery cell to stand at 25 °C for 5 min.
8. The above steps complete one charge-discharge cycle of the battery cell. Repeating the above steps until the cell capacity fades to 80% of the initial value, and recording the number of cycles.

### 8) Capacity fading degree

1000^{th}-cycle capacity retention rate = (1000^{th}-cycle discharge capacity/first-cycle discharge capacity) × 100%.

### 9) Cycle capacity ramp-up degree

Recording the number of continuous cycles in which the capacity retention rate is above 100% in the first 3000 cycles. Determining, if the number of continuous cycles with the capacity retention rate above 100% is greater than or equal to 10, that cycle capacity ramp-up has occurred. Recording a maximum capacity retention rate in the cycles with the capacity retention rate above 100%, and subtracting 100% from the maximum capacity retention rate value to obtain a cycle capacity ramp-up degree. Determining, if the number of continuous cycles with the capacity retention rate above 100% is less than 10, that capacity ramp-up has not occurred during the cycling, and recording the cycle capacity ramp-up degree as

### 10) Flexibility of the electrode plate

Cutting an electrode plate into a size of 5 to 10 cm in length and 2 to 4 cm in width in a normal temperature environment with air humidity below 10%. Folding the resulting electrode plate in half and rolling it up, and then using a 2 kg roller to roll the folded electrode plate at a constant speed of 2 to 3 m/min. Observing whether the folding crease of the electrode plate is light-transmissive, and qualitatively assessing the degree of flexibility of the electrode plate. "n-fold light-transmissive" means: in the test of the electrode plates produced in the same batch, the folding crease is not light-transmissive until the electrode plate is folded back and forth and the same folding crease is rolled n times. The larger the value of n, the higher the flexibility of the electrode plate.

### III. Analysis on the test results of embodiments and comparative embodiments

The batteries described in the embodiments and the comparative embodiments are prepared by the above methods respectively, and performance parameters of the batteries are measured. The parameters of the positive electrode film layer are shown in Table 1, and the performance test results are shown in Table 2.

**Table 1 Parameters of positive electrode film layer (To be continued)**

| Example | First positive active material | | | | | | | |
|---|---|---|---|---|---|---|---|---|
| | First lithium iron phosphate salt particles | | Second lithium iron phosphate salt particles | | BET (m²/g) | Cₓ₁ | z₁ | Compactio n density (g/cm³) |
| | Average primary particle diameter (nm) | Number percentage | Average primary particle diameter (nm) | Number percentage | | | | |
| Embodiment 1 | 150 | 70% | 450 | 30% | 13.2 | 1.2 | 11 | 2.6 |
| Embodiment 2 | 150 | 70% | 450 | 30% | 14.4 | 1.2 | 12 | 2.6 |
| Embodiment 3 | 150 | 70% | 450 | 30% | 15.6 | 1.2 | 13 | 2.6 |
| Embodiment 4 | 150 | 70% | 450 | 30% | 13.2 | 1.2 | 11 | 2.6 |
| Embodiment 5 | 150 | 70% | 450 | 30% | 13.2 | 1.2 | 11 | 2.6 |
| Embodiment 6 | 150 | 70% | 450 | 30% | 13.2 | 1.2 | 11 | 2.6 |
| Embodiment 7 | 150 | 70% | 450 | 30% | 13.2 | 1.2 | 11 | 2.6 |
| Embodiment 8 | 150 | 70% | 450 | 30% | 13.2 | 1.2 | 11 | 2.6 |
| Embodiment 9 | 150 | 70% | 450 | 30% | 13.2 | 1.2 | 11 | 2.6 |
| Embodiment 10 | 150 | 70% | 450 | 30% | 13.2 | 1.2 | 11 | 2.6 |
| Embodiment 11 | 300 | 60% | 400 | 40% | 13.2 | 1.2 | 11 | 2.63 |
| Embodiment 12 | 50 | 80% | 500 | 20% | 13.2 | 1.2 | 11 | 2.43 |
| Embodiment 13 | 150 | 70% | 450 | 30% | 13.2 | 1.2 | 11 | 2.6 |
| Embodiment 14 | 150 | 70% | 450 | 30% | 13.2 | 1.2 | 11 | 2.6 |
| Embodiment 15 | 150 | 70% | 450 | 30% | 13.2 | 1.2 | 11 | 2.6 |
| Embodiment 16 | 150 | 70% | 450 | 30% | 13.2 | 1.2 | 11 | 2.6 |
| Embodiment 17 | 150 | 70% | 450 | 30% | 13.2 | 1.2 | 11 | 2.6 |
| Embodiment 18 | 150 | 70% | 450 | 30% | 12.3 | 1 | 12.3 | 2.48 |
| Embodiment 19 | 150 | 70% | 450 | 30% | 15.5 | 1.5 | 10.3 | 2.55 |
| Comparative Embodiment 1 | 150 | 70% | 450 | 30% | 13.2 | 1.2 | 11 | 2.6 |
| Comparative Embodiment 2 | 150 | 70% | 450 | 30% | 14.4 | 1.2 | 12 | 2.6 |
| Comparative Embodiment 3 | 150 | 70% | 450 | 30% | 15.6 | 1.2 | 13 | 2.6 |

**Table 1 Parameters of positive electrode film layer (Continued)**

| Example | Second positive active material | | | | | | | | W₁/W₂ |
|---|---|---|---|---|---|---|---|---|---|
| | Third lithium iron phosphate salt particles | | | | | BET (m²/g) | Cₓ₂ | Z2 | |
| | Average primary particle diameter (nm) | Dᵥ₅₀ (µm) | C₁ | C₂ | C₂/C₁ | | | | |
| Embodiment 1 | 400 | 0.7 | 150 | 160 | 1.06 | 10.8 | 1.8 | 6 | 1: 1 |
| Embodiment 2 | 400 | 0.7 | 150 | 160 | 1.06 | 10.8 | 1.8 | 6 | 1: 1 |
| Embodiment 3 | 400 | 0.7 | 150 | 160 | 1.06 | 10.8 | 1.8 | 6 | 1: 1 |
| Embodiment 4 | 400 | 0.7 | 154 | 160 | 1.04 | 14.4 | 1.8 | 8 | 1: 1 |
| Embodiment 5 | 400 | 0.7 | 156 | 160 | 1.025 | 18 | 1.8 | 10 | 1: 1 |
| Embodiment 6 | 400 | 0.7 | 157 | 160 | 1.02 | 10.8 | 1.8 | 6 | 1: 1 |
| Embodiment 7 | 400 | 0.7 | 146 | 154.7 | 1.06 | 7.2 | 1.2 | 6 | 1: 1 |
| Embodiment 8 | 400 | 0.7 | 150 | 160 | 1.06 | 12 | 2 | 6 | 1: 1 |
| Embodiment 9 | 400 | 0.7 | 150 | 160 | 1.06 | 6.6 | 1.1 | 6 | 1: 1 |
| Embodiment 10 | 400 | 0.7 | 150 | 160 | 1.06 | 12.6 | 2.1 | 6 | 1: 1 |
| Embodiment 11 | 400 | 0.7 | 150 | 160 | 1.06 | 10.8 | 1.8 | 6 | 1: 9 |
| Embodiment 12 | 400 | 0.7 | 150 | 160 | 1.06 | 10.8 | 1.8 | 6 | 9: 1 |
| Embodiment 13 | 400 | 0.7 | 150 | 160 | 1.06 | 10.8 | 1.8 | 6 | 3: 7 |
| Embodiment 14 | 400 | 0.7 | 150 | 160 | 1.06 | 10.8 | 1.8 | 6 | 7: 3 |
| Embodiment 15 | 400 | 0.7 | 150 | 160 | 1.06 | 10.8 | 1.8 | 6 | 1: 9 |
| Embodiment 16 | 400 | 0.7 | 150 | 160 | 1.06 | 10.8 | 1.8 | 6 | 9: 1 |
| Embodiment 17 | 400 | 0.7 | 158 | 160 | 1.01 | 19 | 1.8 | 10.5 | 1: 1 |
| Embodiment 18 | 400 | 0.7 | 150 | 160 | 1.06 | 10.8 | 1.8 | 6 | 1: 1 |
| Embodiment 19 | 400 | 0.7 | 150 | 160 | 1.06 | 10.8 | 1.8 | 6 | 1: 1 |
| Comparative Embodiment 1 | N/A | | | | | | | | / |
| Comparative Embodiment 2 | | | | | | | | | / |
| Comparative Embodiment 3 | | | | | | | | | / |

**Table 2 Performance test results**

| Example | Compaction density of electrode plate (g/cm³) | Gravimetric capacity (mAh/g) | Cycle life | Capacity fading degree | Cycle capacity ramp-up degree | Flexibility of electrode plate |
|---|---|---|---|---|---|---|
| Embodiment 1 | 2.55 | 154 | 8000 | 91% | 3.0% | 5-fold light-transmissive |
| Embodiment 2 | 2.52 | 154 | 7800 | 89% | 2.7% | 5-fold light-transmissive |
| Embodiment 3 | 2.5 | 154 | 7600 | 88% | 2.5% | 5-fold light-transmissive |
| Embodiment 4 | 2.53 | 153 | 7400 | 87% | 2.5% | 4-fold light-transmissive |
| Embodiment 5 | 2.52 | 153.2 | 7200 | 86% | 2.0% | 4-fold light-transmissive |
| Embodiment 6 | 2.54 | 157 | 6400 | 88% | 1.0% | 5-fold light-transmissive |
| Embodiment 7 | 2.55 | 153 | 8100 | 91% | 2.8% | 5-fold light-transmissive |
| Embodiment 8 | 2.55 | 152 | 6400 | 88% | 1.3% | 6-fold light-transmissive |
| Embodiment 9 | 2.55 | 155 | 5000 | 91% | 3.1% | 5-fold light-transmissive |
| Embodiment 10 | 2.55 | 151 | 8200 | 92% | 3.4% | 6-fold light-transmissive |
| Embodiment 11 | 2.46 | 151 | 9200 | 93% | 4.0% | 5-fold light-transmissive |
| Embodiment 12 | 2.58 | 157 | 6100 | 88% | 0.3% | 5-fold light-transmissive |
| Embodiment 13 | 2.5 | 153 | 8700 | 92% | 3.4% | 5-fold light-transmissive |
| Embodiment 14 | 2.54 | 155 | 6400 | 89% | 1.3% | 5-fold light-transmissive |
| Embodiment 15 | 2.45 | 151 | 9200 | 93% | 4.0% | 5-fold light-transmissive |
| Embodiment 16 | 2.58 | 157 | 6100 | 88% | 0.3% | 5-fold light-transmissive |
| Embodiment 17 | 2.42 | 158 | 6000 | 85% | 0.0% | 4-fold light-transmissive |
| Embodiment 18 | 2.43 | 153 | 7800 | 88% | 2.3% | 4-fold light-transmissive |
| Embodiment 19 | 2.5 | 154 | 7900 | 90% | 3.5% | 5-fold light-transmissive |
| Comparative Embodiment 1 | 2.6 | 158 | 6000 | 87% | - | 3-fold light-transmissive |
| Comparative Embodiment 2 | 2.6 | 157 | 5800 | 86% | - | 3-fold light-transmissive |
| Comparative Embodiment 3 | 2.6 | 156 | 5600 | 85% | - | 3-fold light-transmissive |

The above results show that the positive electrode plates in Embodiments 1 to 19 each include a positive current collector and a positive electrode film layer. The positive electrode film layer is disposed on at least one surface of the positive current collector. The positive electrode film layer includes a first positive electrode film layer and a second positive electrode film layer. The first positive electrode film layer is located between the positive current collector and the second positive electrode film layer. The first positive electrode film layer includes a first positive active material. A specific surface area of the first positive active material is 12 m²/g to 16 m²/g. Based on a total mass of the first positive active material, a carbon content of the first positive active material is 1.0 wt% to 1.5 wt%. The second positive electrode film layer includes a second positive active material. A specific surface area of the second positive active material is 6 m²/g to 19 m²/g. Based on a total mass of the second positive active material, a carbon content of the second positive active material is 1.1 wt% to 2.1 wt%. As can be seen from Embodiments 1 to 19 versus Comparative Embodiments 1 to 3, the positive electrode plates of this application are of relatively high flexibility.

FIG. 1 shows a micromorphology of the first positive active material according to Embodiment 1 of this application. As can be seen from the drawing, the first positive active material in Embodiment 1 of this application includes large particles and small particles that are evenly mixed. The small particles densely fill the pores of the large particles, so that the first positive electrode film layer is of a relatively high compaction density.

FIG. 2 shows a micromorphology of the second positive active material according to Embodiment 1 of this application. As can be seen from the drawing, in the second positive active material in Embodiment 1 of this application, the particle distribution is relatively uniform, and the particles are mainly medium-sized particles and include neither large particles nor small particles. The nonexistence of large particles can improve the kinetics, and the nonexistence of small particles can reduce side reactions, thereby prolonging the cycle life of the battery cell.

As can be seen from Embodiment 1 versus Embodiments 4 to 6 and Embodiment 17, in a case that the second positive active material includes the third lithium iron phosphate salt particles, when the ratio of the coin cell capacity C₂ of the third lithium iron phosphate salt particles at 60 °C to the coin cell capacity C₁ of the third lithium iron phosphate salt particles at 25 °C, denoted as C₂/C₁, is greater than or equal to 1.02, the positive electrode plate provided in an embodiment of this application achieves a relatively high compaction density, and the battery containing the positive electrode plate provided in an embodiment of this application exhibits a relatively long cycle life, a relatively low capacity fading degree, and a relatively high degree of cycle capacity ramp-up.

As can be seen from Embodiment 1 and Embodiments 7 to 8 versus Embodiments 9 to 10, when the carbon content of the second positive active material is 1.2 wt% to 2 wt% based on the total mass of the second positive electrode film layer, the cycle life and gravimetric capacity of the battery containing the positive electrode plate of this application are well balanced. When the carbon content of the second positive active material is less than 1.2% (Embodiment 9), the cycle life of the battery containing the positive electrode plate of this application is relatively short. When the carbon content of the second positive active material is greater than 2% (Embodiment 10), the gravimetric capacity of the battery containing the positive electrode plate of this application is relatively low.

As can be seen from Embodiment 1 and Embodiments 13 to 14 versus Embodiments 15 to 16, when the ratio of the mass W₁ of the first positive active material to the mass W₂ of the second positive active material, denoted as W₁/W₂, falls within the range of 3: 7 to 7: 3, the positive electrode plate of this application achieves a relatively high compaction density, and the battery containing the positive electrode plate of this application exhibits a relatively high degree of cycle capacity ramp-up. When the W₁/W₂ ratio is less than 3: 7 (Embodiment 15), the compaction density of the positive electrode plate of this application is relatively low. When the W₁/W₂ ratio is greater than 7: 3 (Embodiment 16), the cycle capacity ramp-up degree of the battery containing the positive electrode plate of this application is relatively low.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A positive electrode plate, comprising a positive current collector and a positive electrode film layer, wherein the positive electrode film layer is disposed on at least one surface of the positive current collector, the positive electrode film layer comprises a first positive electrode film layer and a second positive electrode film layer, and the first positive electrode film layer is located between the positive current collector and the second positive electrode film layer;
the first positive electrode film layer comprises a first positive active material, a specific surface area of the first positive active material is 12 m²/g to 16 m²/g, and, based on a total mass of the first positive active material, a carbon content of the first positive active material is 1.0 wt% to 1.5 wt%; and
the second positive electrode film layer comprises a second positive active material, a specific surface area of the second positive active material is 6 m²/g to 19 m²/g, and, based on a total mass of the second positive active material, a carbon content of the second positive active material is 1.1 wt% to 2.1 wt%.

2. The positive electrode plate according to claim 1, wherein a compaction density of the first positive active material is 2.4 to 2.7 g/cm³ when measured under a pressure of 3 tons.

3. The positive electrode plate according to claim 1 or 2, wherein the first positive active material comprises first lithium iron phosphate salt particles and second lithium iron phosphate salt particles, an average primary particle diameter of the first lithium iron phosphate salt particles is 50 to 300 nm, and an average primary particle diameter of the second lithium iron phosphate salt particles is 400 to 500 nm.

4. The positive electrode plate according to any one of claims 1 to 3, wherein, based on a total number of the first lithium iron phosphate salt particles and the second lithium iron phosphate salt particles, a number percentage of the first lithium iron phosphate salt particles is 60% to 80%, and a number percentage of the second lithium iron phosphate salt particles is 20% to 40%.

5. The positive electrode plate according to any one of claims 1 to 4, wherein, based on the total mass of the second positive active material, the carbon content of the second positive active material is 1.2 wt% to 2 wt%.

6. The positive electrode plate according to any one of claims 1 to 5, wherein a ratio of a mass W₁ of the first positive active material to a mass W₂ of the second positive active material, denoted as W₁/W₂, is 1: 9 to 9: 1.

7. The positive electrode plate according to any one of claims 1 to 6, wherein, a ratio of a mass W₁ of the first positive active material to a mass W₂ of the second positive active material, denoted as W₁/W₂, is 3: 7 to 7: 3.

8. The positive electrode plate according to any one of claims 1 to 7, wherein a thickness of the first positive electrode film layer and a thickness of the second positive electrode film layer each are independently 5 to 80 µm.

9. A secondary battery, comprising the positive electrode plate according to any one of claims 1 to 8.

10. An electrical device, comprising the secondary battery according to claim 9.
